(19) Europäisches Patentamt
European Patent Office
Office européen des brevets

(11) Veröffentlichungsnummer: **0 264 473 B1**

(12) **EUROPÄISCHE PATENTSCHRIFT**

(45) Veröffentlichungstag der Patentschrift: **27.03.91**

(51) Int. Cl.5: **B23D 37/00**, B23D 41/04, B23Q 3/155

(21) Anmeldenummer: **86114598.5**

(22) Anmeldetag: **21.10.86**

(54) **Drehräummaschine.**

(43) Veröffentlichungstag der Anmeldung:
**27.04.88 Patentblatt 88/17**

(45) Bekanntmachung des Hinweises auf die Patenterteilung:
**27.03.91 Patentblatt 91/13**

(84) Benannte Vertragsstaaten:
**AT DE FR GB IT**

(56) Entgegenhaltungen:
**EP-A- 0 015 787**
**DE-C- 39 696**
**DE-U- 8 332 432**
**US-A- 4 423 546**

(73) Patentinhaber: **Wilhelm Hegenscheidt Gesellschaft mbH**
**Neusser Strasse 3**
**W-5140 Erkelenz(DE)**

(72) Erfinder: **Berstein, Garri, Dr.-Ing.**
**Charles de Gaulle-Strasse 2**
**W-5140 Erkelenz(DE)**
Erfinder: **Obrig, Hans W., Dr.-Ing.**
**Gillhausenstrasse 5**
**W-4300 Essen(DE)**
Erfinder: **Wolters, Hermann, Dipl.-Ing.**
**Irisweg 25**
**W-4050 Mönchengladbach 4(DE)**

(74) Vertreter: **Liermann, Manfred**
**Schillingsstrasse 335**
**W-5160 Düren(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Drehräummaschine mit einem Werkzeugträger für Drehräumwerkzeuge mit mindestens einer Aufnahmefläche zur Aufnahme von Drehräumwerkzeugen. Maschinen solcher Art sind bekannt geworden beispielsweise durch das DE-U 83 32 432.1. Bei Maschinen dieser Art sind den einzelnen am Werkstück zu bearbeitenden Stellen entsprechende, auf einem linear verfahrbaren Schlitten angeordnete Drehräumwerkzeuge zugeordnet, die entsprechend dem Seitenabstand der am Werkstück zu bearbeitenden Stellen auf einem als Schlitten ausgebildeten Werkzeugträger befestigt sind. Es ist jedoch in einer modernen Fertigungsanlage häufig so, daß Werkstücke gleichen Typs, jedoch mit unterschiedlichen seitlichen Abständen der zu bearbeitenden Stellen in jeweils mittleren oder kleineren Losgrößen wechseln. Es ist dann jeweils erforderlich, die Drehräumwerkzeuge auf dem Werkzeugträger umzurüsten, was umständlich ist und viel Zeit erfordert. Die notwendig werdende manuelle Arbeit des Umrüstens behindert eine flexible Fertigung in mittleren und kleineren Losgrößen.

Die gleichen vorbeschriebenen Nachteile treten dann auf, wenn die am Werkstück zu bearbeitenden Profile sich ändern, so daß die Werkzeugbestückung geändert werden muß.

Auch eine Kombination beider Fälle kommt vor.

Ausgehend von diesem Stand der Technik liegt der Erfindung somit die Aufgabe zugrunde, Maschinen der eingangs beschriebenen Art so weiterzuentwickeln, daß eine Umrüstung auf unterschiedliche Abstände von an einem Werkstück zu bearbeitender Stellen und/oder eine Umrüstung der Werkzeuge schneller als bisher erfolgen kann.

Erfindungsgemäß ist diese Aufgabe dadurch gelöst, daß die Drehräumwerkzeuge auf dem Werkzeugträger mindestens quer zur Arbeitsrichtung stufenlos verschiebbar und feststellbar sind, sowie daß jedem Ende mindestens eines Drehräumwerkzeuges zugeordnete, verschiebbare und mit dem Ende in Arbeitskontakt bringbare Mitnehmer mit Verschiebeantrieben verbunden sind. Durch die stufenlose Verstellbarkeit können die Drehräumwerkzeuge sehr rasch auf unterschiedliche Lagen ausgerichtet werden und es gelingt, die Drehrämwerkzeuge mit Hilfe dieser Mitnehmer in gewünschter Weise zu verschieben. Eine manuelle Verschiebung der Werkzeuge kann dadurch entfallen. Eine Alternative Lösung besitzt die Merkmale von patentanspruch 2. Hierdurch wird der Austausch der Drehräumwerkzeuge sehr erleichtert, weil nun nicht mehr die Drehräumwerkzeuge seitlich ausgeschoben werden müßten, sondern nach oben entnommen und von oben eingesetzt werden können. Besonders vorteilhaft ist dies dann, wenn beispielsweise nur ein einziges Drehräumwerkzeug ausgetauscht werden muß.

Ergänzend ist dann nach der Erfindung vorgeschlagen, daß jede Aufnahmefläche mindestens eine quer zur Arbeitsrichtung verlaufende, über den gesamten Verstellbereich sich erstreckenden Führungs- und Spannut für ein Drehräumwerkzeug oder für zugeordnete Befestigungsmittel aufweist. Durch diese Führungs- und Spannut wird eine sehr einfache Verschiebemöglichkeit für Drehräumwerkzeuge geschaffen, die gleichzeitig eine einfache Klemmung der Drehräumwerkzeuge in gewünschter Position ermöglicht. Die beschriebene Lage dieser Nut erlaubt es gleichzeitig die notwendigen Zerspanungskräfte einfach zu übertragen.

Weiterhin sind nach der Erfindung kraftbetätigte Spannmechanismen vorgesehen, zum Spannen der Drehräumwerkzeuge auf dem Werkzeugträger. Hierdurch kann in gewünschter Position der Drehräumwerkzeuge mindestens die Spannung der Werkzeuge automatisch erfolgen. Hierdurch gelingt es, die Drehräumwerkzeuge zunächst allesamt auszurichten und dann mit einem einzigen Schaltvorgang alle Werkzeuge in der ausgerichteten Position zu spannen.

Es ist ergänzend nach der Erfindung vorgesehen,daß jede Führungs- und Spannut als T-Nut ausgebildet ist. Eine solche T-Nut genügt den an eine Führung und Spannung zu stellenden Anforderungen und ist einfach herstellbar.

Ergänzend ist dann nach der Erfindung noch vorgesehen, daß die einem Ende zugeordneten Mitnehmer gemeinsam in einem Magazin angeordnet sind, wobei dann weiter vorgeschlagen wird, daß allen Mitnehmern Verschiebeantriebe zugeordnet sind. Dadurch, daß jedem Mitnehmer ein einzelner Verschiebeantrieb zugeordnet ist, kann jeder Mitnehmer unabhängig von jedem anderen Mitnehmer verschoben werden. Gleichzeitig könnte aber auch über eine Synchronisation der Verschiebeeinrichtungen eine gemeinsame Bewegung durchgeführt werden.

Weiterhin ist nach der Erfindung vorgeschlagen, daß allen Mitnehmern Wegmeßmittel zugeordnet sind. Hierdurch wird es möglich über eine zentrale, beispielsweise in der Maschinensteuerung untergebrachte Datenverarbeitungseinrichtung (eine sog. CPU) bestimmte Positionen oder bestimmte Größen des Verschiebeweges für die Mitnehmer und damit für die Werkzeuge vorzugeben oder zu programmieren. Der zurückgelegte Weg oder die erreichte Position wird durch die Wegmeßmittel kontrollierbar. Gleichzeitig kann mit Hilfe eines entsprechenden elektronischen Speichers der letzte Standort der Mitnehmer gespeichert werden, so daß es möglich ist, bestimmte Positionen, in denen Werkzeuge bei der letzten Positionierung sich befanden, wieder anzufahren mit den Mitnehmern so, daß die Mitnehmer wieder in richtiger Position zur Anlage an die Werkzeuge gebracht werden können.

Es ist weiterhin nach der Erfindung vorgeschlagen, daß mindestens ein Magazin mit einem Verschiebeantrieb verbunden oder verbindbar ist. Hierdurch kann ein solches Magazin mit den Mitnehmern auf die Enden der Werkzeuge zugefahren werden und diese übernehmen. Das zweite Magazin kann mit seinen Mitnehmern an die anderen Enden der Werkzeuge dadurch angelegt werden, daß der ganze Werkzeugträger mit den Werkzeugen in Richtung des anderen Magazins gefahren wird. Der Verschiebeantrieb des einen Magazins kann dann dieses Magazin dem Werkzeugträger hinterherfahren. Auf diese Art und Weise wird nur ein einziger Verschiebeantrieb für ein Magazin notwendig.

Ausgestaltend ist dann nach der Erfindung vorgeschlagen, daß mindestens ein Magazin über eine lösbare Kupplung mit dem Werkzeugträger verbindbar ist. Hierdurch gelingt es den Verschiebeantrieb für den Werkzeugträger gleichzeitig als Verschiebeantrieb für ein Magazin zu verwenden. Ein zusätzlicher Verschiebeantrieb für dieses Magazin kann dann entfallen.

Weiterhin ist nach der Erfindung vorgeschlagen, sowohl den Werkzeugträger, als auch mindestens ein Magazin als Schlitten auszubilden. Wobei dann ergänzend vorgeschlagen ist, daß am Maschinenständer gemeiname Gleitführungen für Werkzeugträger und Magazin vorgesehen sind. Dies vereinfacht die Konstruktion, weil jeweils gesonderte Führungen für unterschiedliche Schlitten nicht mehr erforderlich sind.

Es ist weiterhin nach der Erfindung vorgesehen, daß als Spannmechanismus mindestens eine Kolben-Zylinder-Einheit, mindestens einseitig betätigbar durch ein Fluid, vorgesehen ist. Eine solche Einrichtung ist einfach aufgebaut und gewährleistet eine sichere Spannung.

Es ist dann ergänzend nach der Erfindung vorgesehen, daß für jedes in die Nut eingesetzte Drehräumwerkzeug mindestens eine Kolben-Zylinder-Einheit vorgesehen ist. Hierdurch gelingt es, die einzelnen Kolben-Zylinder-Einheiten kleiner zu bauen und dennoch für jedes einzelne Drehräumwerkzeug ausreichende Spannkräfte zu erreichen.

Eine Ergänzung nach der Erfindung sieht vor, daß jede Kolben-Zylinder-Einheit in Richtung der Nut verschiebbar angeordnet ist. Hierdurch ist auch in unterschiedlichen Lagen jeweils mindestens eine Kolben-Zylinder-Einheit immer in richtiger und direkter Klemmposition zum zugeordneten Drehräumwerkzeug bringbar.

Weiter ausgestaltend ist dann nach der Erfindung vorgesehen, daß im Werkzeugträger jede Kolben-Zylinder-Einheit mit einem dort angeordneten Verschiebeantrieb verbunden oder verbindbar ist. Hierdurch gelingt es, auch die Positionierung der Kolben-Zylinder-Einheit für die Klemmung der Drehräumwerkzeuge automatisch vorzunehmen.

Nach einer weiter ergänzenden Ausgestaltung ist dann nach der Erfindung vorgeschlagen, daß im Werkzeugträger mindestens einer Nut zugeordnet eine angetriebene Spindel vorgesehen ist, die über schaltbare Kupplungen mit den Kolben-Zylinder-Einheiten verbindbar ist. Hierdurch ist es möglich automatisch die Kolben-Zylinder-Einheiten gemeinsam, teilweise oder einzeln beliebig zu positionieren. Die angetriebene Spindel kann hierbei z. B. eine normale Gewindespindel, aber auch eine sog. Kugelrollspindel sein. Die Bewegungsrichtung und der zurückgelegte Weg einer jeden Kolben-Zylinder-Einheit kann ermittelt werden über die Drehrichtung der Spindel und über die Anzahl der Umdrehungen der Spindel, verknüpft mit der jeweils geschalteten Kupplung.

Eine Ausgestaltung der Erfindung sieht vor, daß ein Manipulator und ein Werkzeugmagazin vorgesehen ist, wobei der Manipulator einen verfahrbaren und positionierbaren Greifer aufweist, mit welchem mindestens ein Drehräumwerkzeug oder mindestens ein Einzelsegment eines Drehräumwerkzeuges auf mindestens dem Werkzeugträger oder dem Werkzeugmagazin positionierbar für eine Übernahme oder Einspannung ist. Mit Hilfe eines solchen Manipulators können Einzelwerkzeuge, Werkzeugsätze oder Einzelsegmente einzelner Werkzeuge vollautomatisch ausgetauscht werden. Gleichzeitig kann e in solcher Manipulator die ausgetauschten Drehräumwerkzeuge positionieren. Die eingefahrene Position wird von der Maschinensteuerung vorgegeben oder von dieser registiert und es veranlaßt dann die Maschinensteuerung ein Verfahren der zuzuordnenden Kolben-Zylinder-Einheiten über die angetriebene Spindel zur Klemmung der positionierten Drehräumwerkzeuge.

Ergänzend ist nach der Erfindung vorgeschlagen, daß der Greifer in antreibbaren und positionierbaren Schlitten für eine Positionierung in Richtung von zwei zueinander senkrecht stehenden Achsen, z. B. für eine vertikale und horizontale Positionierung angeordnet ist. Eine solche Konstruktion für die Bewegung des Greifers bietet Gewähr für eine ausreichende Steifigkeit, so daß der Greifer mit der notwendigen Genauigkeit positioniert werden kann.

Außerdem ist nach der Erfindung noch vorgeschlagen, daß der Manipulator mit Greifern in Richtung der Hubbewegung des Werkzeugträgers gesehen, vor oder hinter den Spindelstöcken angeordnet ist, so daß der gegenüberliegende Bereich und der Bereich oberhalb der Spindelstöcke frei bleibt. Durch diese Anordnung des Manipulators für den Werkzeugwechsel und die Werkzeugpositionierung bleiben alle günstigen Bereiche der Maschine für eine Werkstückzuführung frei.

Schließlich ist nach der Erfindung noch vorgeschlagen, daß der Werkzeugträger einen Klemmechanismus und mindestens ein Verstellorgan eines Verstellantriebs aufweist. Auf diese Art und Weise kann die komplette Verstellbewegung der Werkzeuge im Bereich des Werkzeugträgers vorgenommen werden. Äußere Hilfsmittel für die Positionierung der Werkzeuge sind dann entbehrlich.

Die Erfindung soll nun anhand der beigefügten Zeichnungen, die Ausführungsbeispiele zeigen, näher erläutert werden.

Es zeigen:

**Figur 1:** Drehräummaschine gesehen in Richtung des Pfeils C nach Figure 2 bei abgetrenntem vorderen Spindelstock
**Figur 2:** Ansicht in Richtung des Pfeils B nach Figur 1
**Figur 3:** Ausschnittbereich Y in Ansicht nach Pfeil A in Figur 1
**Figur 4:** Klemmechanismus für ein Werkzeug in einer T-Nut
**Figur 5:** Ansicht wie Figur 1, jedoch mit vorderem Spindelstock und Werkzeugwechselmanipulator (Ansicht in Richtung des Pfeils E Nach Figur 7)
**Figur 6:** Ausschnitt X nach Figur 5
**Figur 7:** Ansicht in Richtung des Pfeils F nach Figur 5
**Figur 8:** Längsschnitt durch einen drehend bewegten Werkzeugträger
**Figur 9:** Schnitt K-L nach Figur 8
**Figur 10:** Schnitt G-H nach Figur 8

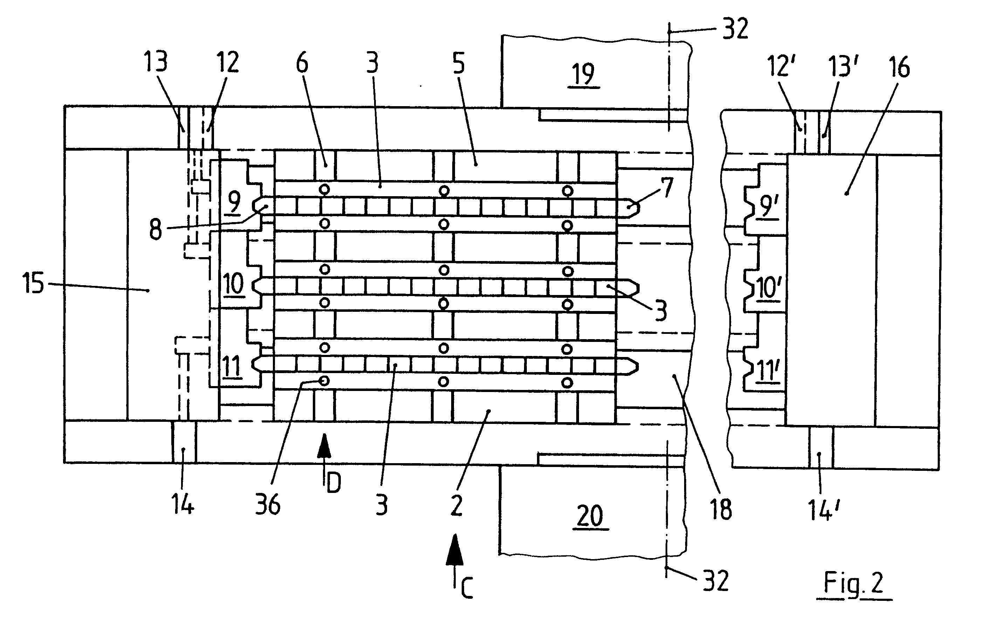

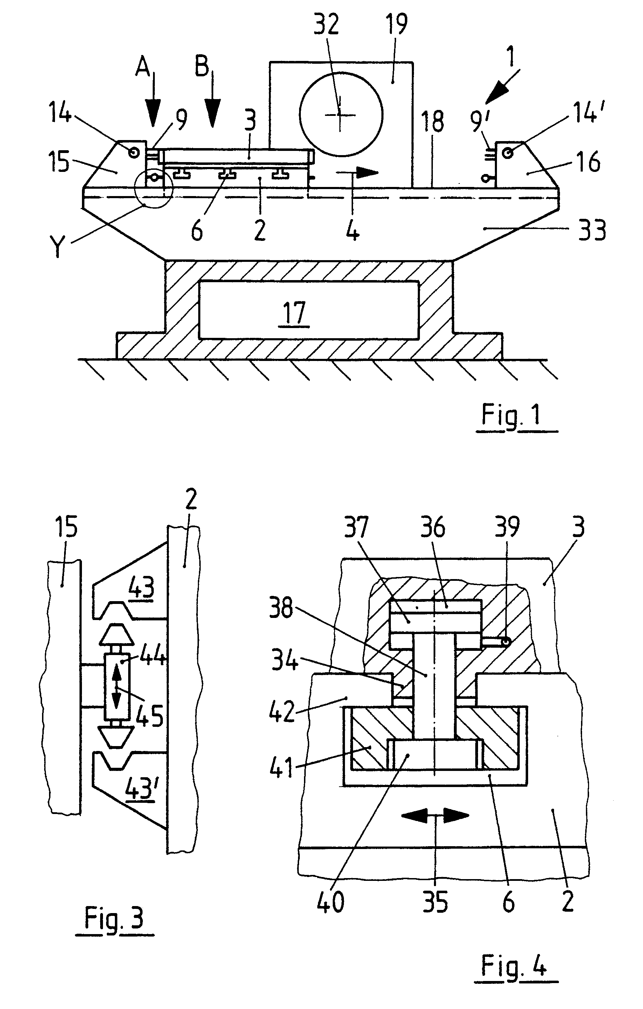

Figur 1 zeigt eine Drehräummaschine, betrachtet in Richtung des Verlaufs der Spindelachse 32 (in Richtung des Pfeils C nach Figur 2), jedoch bei abgeschnittenem vorderem Spindelstock 20. Der Maschinenständer 17 ist daher geschnitten im Querschnitt dargestellt. Der Maschinenständer 17 trägt einstückig oder aufgesetzt ein Bett 33, welches quer zur Spindelachse 32 ausgerichtet ist und unterhalb der Spindelachse in gleicher Richtung eine Gleitführung 18 aufweist. Auf der Gleitführung 18 ist verschiebbar ein Werkzeugträger 2 angeordnet, der mit einem nicht näher dargestellten Verschiebeantrieb verbunden ist. Weiterhin ist auf dem Bett 33 ein feststehendes Magazin 16 und ein in den Gleitführungen 18 verschiebliches Magazin 15 angeordnet. Sowohl im Magazin 15 als auch im Magazin 16 sind parallel zur Gleitführung 18 und in Richtung der Spindelachse 32 verschieblich angeordnete Mitnehmer 9, 10 und 11 bzw. 9', 10' und 11' angeordnet. Die genannten Mitnehmer weisen jeweils einen unabhängigen Verschiebeantrieb 12, 13 und 14 bzw. 12', 13' und 14' auf, beispielsweise in Form von Strömungsmittelzylindern. Weiterhin ist jeder der genannten Mitnehmer mit einem elektronischen Weggeber ausgerüstet, so daß der Verschiebeweg jedes einzelnen Mitnehmers, bezogen auf einen definierten Referenzpunkt, ermittelt und einer Maschinensteuerung mitgeteilt werden kann. Die Maschinensteuerung kann hierbei einen Datenspeicher und eine CPU aufweisen, zur Speicherung und Verarbeitung aller ankommenden Daten. Die Datenverarbeitung kann hierbei auch so erfolgen, daß die Verschiebeantriebe eines Magazins mit den Verschiebeantrieben des anderen Magazins synchronisierbar sind, so daß eine synchrone Bewegung der einzelnen genannten Mitnehmer erfolgen kann. Der Werkzeugträger 2 weist in Richtung der Spindelachse 32 verlaufende Führungs- und Spannuten 6 in Form von T-Nuten auf (Figur 4). Auf dem Werkzeugträger der Drehräummaschine 1 sind in üblicher Anordnung Drehräumwerkzeuge 3 angeordnet, so daß bei Hubbewegung des Werkzeugträgers 2 entlang der Gleitführung 18 ein Werkstück, das sich mit der Spindelachse 32 dreht, bearbeitet werden kann. Jedes Werkzeug 3 weist für mindestens eine T-Nut ein Führungselement 34 auf, mit welchem das Werkzeug 3 in den oberen schmalen Bereich der T-Nut eingreift, so daß es dort entlang der T-Nut verschieblich geführt ist und in Richtung der Hubbewegung des Werkzeugträgers 3 Kräfte auf das Werkzeug 3 übertragen kann. In Figur 4 ist die Richtung der Hubbewegung durch Pfeil 35 angedeutet.

Es weist das Drehräumwerkzeug 3 im Bereich des Führungselementes 34 weiterhin beispielsweise einen Hydraulikzylinder 36 auf, in welchem verschieblich ein Kolben 37 mit einer Kolbenstange 38 angeordnet ist. Mindestens auf der Kolbenstangenseite ist der Hydraulikzylinder 36 mit einer Druckleitung 39 verbunden. Das dem Kolben 37 abgewandte Ende der Kolbenstange 38 trägt eine Mitnehmerscheibe 40, auf der kolben stangenseitig ein Klemmschuh 41 angeordnet ist. Wird der Hydraulikzylinder 36 über die Druckleitung 39 mit Druckmedium versorgt, so fährt die Kolbenstange 38 ein und sorgt über die Mitnehmerscheibe 40 dafür, daß der Klemmschuh 41 gegen die Innenfläche des oberen Flansches 42 der T-Nut gepresst wird. Solange dieser Zustand aufrecht erhalten wird, ist das Drehräumwerkzeug 3 in seiner Position festgeklemmt. Die notwendige Klemmkraft kann über den Druck des Druckmediums geregelt werden. Sollen die Werkzeuge 3 entlang der T-Nut in eine neue Position verschoben werden, so muß der Hydraulikzylinder 36 über die Druckleitung 39 lediglich entlastet werden. Die beschriebene Klemmung ist damit gelöst und die Drehräumwerkzeuge 3 können verschoben werden.

Den Standort der Werkzeuge 3 in Richtung des Verlaufs der T-Nuten behält die Maschinensteuerung im Gedächtnis. Die entsprechenden Wegpositionen sind dort gespeichert. Sollen die Werkzeuge 3 verschoben werden, so werden von der Maschinensteuerung die Mitnehmer 9 bis 11 im Magazin 15 und die Mitnehmer 9′ bis 11′ im Magazin 16 auf die augenblicklich vorhandenen Werkzeugpositionen gefahren. Die genannten Greifer haben Einrichtungen, die mit Enden 7 bzw. 8 der Werkzeuge 3 in Arbeitskontakt bringbar sind, so daß die genannten Mitnehmer Verschiebekräfte auf die Werkzeuge 3 übertragen können.

Weisen die genannten Mitnehmer die richtige Position auf, so wird der Werkzeugträger in Richtung des Magazins 15 verfahren, bis in eine vorgegebene Wegposition. Der Werkzeugträger 2 weist an der dem Magazin 15 zugewandten Stirnseite zwei feststehende Greifklauen 43 und 43′ auf. Die entsprechende Stirnseite des Magazins 15 weist einen Strömungsmittelzylinder 44 auf, der zwei Kolben und den Kolben zugeordnete, in entgegengesetzter Richtung ausfahrbare Kolbenstangen aufweist. Die äußeren Enden der Kolbenstangen weisen nicht näher bezeichnete Arretierstücke auf, die mit den Greifklauen 43 und 43′zusammenarbeiten können und in Richtung des Pfeils 45 ausgefahren werden (siehe Figur 3). Sind die Arretierstücke in Richtung des Pfeils 45 ausgefahren und sitzen richtig in den Greifklauen 43 und 43′, so ist dadurch zwischen dem Werkzeugträger 2 und dem Magazin 15 eine solche Distanz erreicht und gesichert, daß die Mitnehmer 9 bis 11 mit den Enden 8 der Werkzeu ge 3 in Arbeitskontakt sind. Nun wird der Werkzeugträger 2 in Arbeitsrichtung 4 zum Magazin 16 bewegt und dort in der in Figur 3 dargestellten und hierzu beschriebenen Weise ebenfalls mit dem Magazin 16 gekoppelt, so daß auch die Mitnehmer 9′ bis 11′ mit den Enden 7 der Werkzeuge 3 in Arbeitskontakt sind.

Nachdem die zu Figur 4 bereits beschriebene Klemmung der Drehräumwerkzeuge 3 gelöst ist, können diese mit Hilfe der entsprechenden Verschiebeantriebe 12 bis 14 bzw. 12′ bis 14′, die sich nun synchron bewegen, auf der Aufnahmefläche 5 des Werkzeugträgers 2 entlang der T-Nuten verschoben werden. Ist eine gewünschte oder vorgegebene Position erreicht, werden die Werkzeuge 3 in der bereits beschriebenen Weise auf dem Werkzeugträger 2 geklemmt. Die Kupplung am Magazin 16 wird gelöst und es wird der Werkzeugträger nun wieder entgegengesetzt zur Richtung des Pfeils 4 verfahren, wodurch das Magazin 15 an das andere Ende des Bettes 33 gebracht und dort durch lösen der zu Figur 3 bereits beschriebenen Kupplung abgestellt. Gleichzeitig befindet sich jetzt der Werkzeugträger 2 in Ausgangposition für eine Werkstückbearbeitung, weil die vom Pfeil 4 angegebene Richtung die Arbeitsrichtung sein soll. Es kann nun ein neues Werkstück eingelegt und bearbeitet werden. Ein neues Werkstück wird hierbei von den Spindelstöcken 19 und 20 getragen, gehalten und in Drehung versetzt.

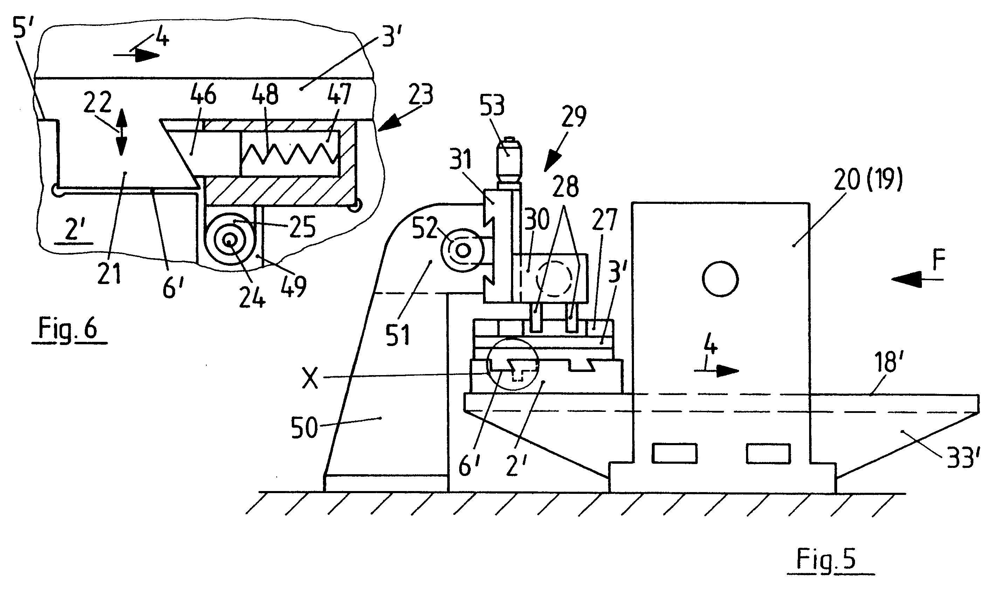

Eine Ergänzung oder auch eine Variante zu der bisher beschriebenen Maschine ist dargestellt in den Figuren 5 bis 7. Die Figur 5 zeigt eine Darstellung einer Drehräummaschine ganz ähnlich wie Figur 1, jedoch
- um beispielsweise größere Werkstücke zu bearbeiten - mit einem zwischen den Spindelstöcken 19 und 20 tiefer angeordneten Bett 33′. Abgesehen von der tieferen Lage kann das Bett 33′ genauso gestaltet sein, wie das bereits beschriebene Bett 33.

Das Bett 33′ der Maschine nach Figur 5 weist ebenfalls einen Werkzeugträger 2′ auf, der quer verlaufende Spann-und Führungsnuten 6′ aufweist, die allerdings in noch zu beschreibender Weise anders gestaltet sind als die Nuten 6 des bereits beschriebenen Werkzeugträgers 2.Außer dem Werkzeugträger 2′ kann das Bett 33′ auch die Magazine 15 und 16 in der zu Figur 1 bereits beschriebenen Anordnung aufweisen. Es kann aber bei einer Ausführungsform der erfindungsgemäßen Maschine nach den Figuren 5 bis 7 auch auf diese Magazine 15 bis 16 verzichtet werden.

Der Werkzeugträger 2′ weist quer zur Arbeitsrichtung 4 verlaufende Führungsnuten 6′ auf, von denen mindestens eine Führungsnut einen nach oben offenen und rechtwinkligen Querschnitt aufweist. In diese Nut 6′ ragt ein Steg 21 eines Werkzeugs 3′ hinein. Der Steg 21 ist im Querschnitt auf der einen Seite rechtwinklig ausgebildet und liegt mit seiner vertikalen Fläche an einer entsprechenden vertikalen Fläche der Nut 6′ an, so daß die bei einer Bewegung in Richtung des Pfeils 4 auftretenden Zerspanungskräfte dort vom Werkzeugträger 2′ über die genannte Fläche des Stegs 21 auf das Werkzeug 3′ übertragen werden können. Die der genannten vertikalen Fläche des Stegs 21 gegenüberliegende Fläche ist geneigt nach Art einer Schwalbenschwanzführung. An diese Fläche kann ein entsprechend abgeschrägter Kolben 46 einer Kolben-Zylinder-Einheit 23 zur Anlage gebracht und mit Klemmkraft angepreßt werden. Hierzu wird der Zylinderraum 47 der Kolben-Zylinder-Einheit 23 einfach mit Druckmedium beaufschlagt. Bei Druckentlastung kann eine Feder 48 für einen Rückzug des Kolbens 46 in den Zylinderraum 47 sorgen.

Die ganze Kolben-Zylinder-Einheit 23 ist in der Nut 6′ angeordnet und in Richtung des Nutverlaufs ebenso wie das Werkzeug 3′ mit dem Steg 21 verschiebbar. Eine solche Verschiebung kann manuell durchgeführt werden, kann aber auch durch eine Kopplung zwischen Werkzeug 3′ und Kolben-

Zylinder-Einheit 23 erfolgen. Im Ausführungsbeispiel (siehe Figur 6) ist jede Kolben-Zylinder-Einheit 23 selbständig und unabhängig bewegbar. Hi erzu weist die Nut 6′ auf dem Nutgrund einen weiteren, sich in Richtung des Verlaufs der Nut erstreckenden Schlitz 49 auf, in welchem eine Gewindespindel oder eine Kugelrollspindel drehantreibbar angeordnet und gelagert ist. Jede Kolben-Zylinder-Einheit 23 ist mit dieser Gewindespindel oder der Kugelrollspindel über eine geeignete Mutter verbunden, die über eine betätigbare und damit lösbare Kupplung mit der Kolben-Zylinder-Einheit verbunden ist. Bei einer Drehung der Gewindespindel oder der Kugelrollspindel 24 kann bei geeigneter Betätigung der schaltbaren Kupplung 25 die Kolben-Zylinder-Einheit 23 mitgenommen werden. Hierdurch kann die Kolben-Zylinder-Einheit 23 in eine für eine Klemmung des Werkzeuges 3′ geeignete Position gefahren werden. Ist hingegen der Kolben 46 der Kolben-Zylinder-Einheit 23 von der Feder 48 zurückgezogen, so entsteht eine Öffnung, die es erlaubt ein Werkzeug 3′ mit dem Steg 21 in Richtung des Pfeils 22 einzusetzen oder zu entnehmen.

Um Drehräumwerkzeuge 3′ einzeln oder insgesamt zu tauschen oder zu versetzen, ist ein Manipulator 29 vorgesehen, der - in Portalbauweise gestaltet- hinter der Maschine angeordnet ist. An Ständern 50, die am Fundament befestigt sind, ist ein Querträger 51 angeordnet, der auf seiner der Maschine zugewandten Stirnseite eine Schwalbenschwanzführung aufweist, auf der ein Schlitten 31 mittels eines Motors 52 längsverschieblich und positionierbar angeordnet ist. Der Schlitten 31 kann somit in horizontaler Richtung exakt positioniert werden. Hierzu kann der Motor 52 entsprechend ausgebildet und mit der Maschinen steuerung verbunden sein.

Auf dem Schlitten 31 ist in vertikal gerichteten Schwalbenschwanzführungen ein Schlitten 30 verschiebbar und über einen Motor 53 positionierbar angeordnet. Auch Motor 53 ist mit der Maschinensteuerung zur exakten Positionierung des Schlittens 30 verbunden. Im Schlitten 30 sind Greifer 28 angeordnet und über einen Spannmotor 54 betätigbar.

Neben der Drehräummaschine, jedoch im Arbeitsbereich des Manipulators 29 befindet sich ein Werkzeugmagazin 26, auf welchem Werkzeuge 55 in bekannter Position so angeordnet sind, daß sie vom Greifer 28 des Manipulators 29 übernommen werden können. Gleichzeitig weist das Werkzeugmagazin 26 auch noch Freiraum auf für Werkzeuge 3, die von den Greifern 28 des Manipulators 29 dort abgelegt werden können.

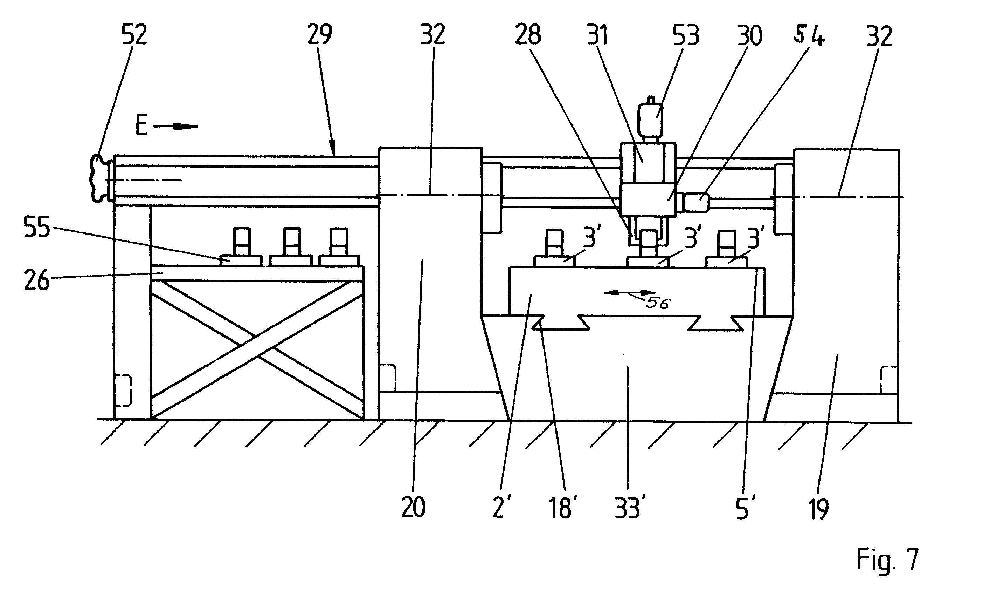

Soll beispielsweise das mittlere Werkzeug 3′ nach Figur 7 getauscht werden, so wird hierzu über die Motoren 52 und 53 der Schlitten 31 und der Schlitten 30 so in Position gefahren, daß die Greifer 28 dieses Werkzeug 3′ ergreifen und spannen können, so wie dies in Figur 7 dargestellt ist. Wenn dies erfolgt ist, wird der Zylinderraum 47 der Kolben-Zylinder-Einheit 23 durckentlastet, so daß die Feder 48 den Kolben 46 in den Zylinderraum 47 hineinziehen kann. Ist dies geschehen, wird durch Betätigung des Motors 53 der Schlitten 30 angehoben und damit das Werkzeug 3′ in Richtung des Pfeils 22 nach oben aus der Nut 6′ ausgehoben. Nachdem der Schlitten 30′ in geeigneter Höhenlage stillgesetzt ist, wird über den Motor 52 der Schlitten 31 seitlich auf dem Querträger 51 verfahren, bis sich das Werkzeug 3′ über eine Leerposition des Werkzeugmagazins 26 befindet. Der Schlitten 30 kann dann abgesenkt werden, bis das Werkzeug 3′ in Ablageposition ist und es kann dann durch Betätigung des Motors 54 der Greifer 28 gelöst werden. Daraufhin wird der Schlitten 30 wieder aufwärts gefahren und der Schlitten 31 wird seitwärts gefahren in eine Position, die es nach erneutem Abwärtsfahren des Schlittens 30 dem Greifer 28 erlaubt, ein Werkzeug 55 auf dem Werkzeugmagazin 26 zu ergreifen und zu spannen. Das Werkzeug 55 wird dann durch Aufwärtsbewegung des Schlittens ausgehoben und durch Seitwärtsbewegung des Schlittens 31 in seitliche 30 Ablageposition zur Ablage auf dem Werkzeugträger 2′ verfahren. Der Verfahrweg kann hierbei in Abhänigkeit von der gewünschten Ablageposition natürlich vorbestimmt oder vorprog rammiert werden und es kann über geeignete, mit den einzelnen Schlitten zusammenwirkende Weggeber die jeweilige Istposition der Schlitten exakt bestimmt werden. In richtiger Ablageposition wird der Schlitten 30 wieder abwärts gefahren und das Werkzeug 3′ mit seinem Steg 21 in die Nut 6′ eingesetzt. Gleichzeitig, vorher oder nachfolgend wird eine zugeordnete Kolben-Zylinder-Einheit 23 durch Betätigung der Spindel 24 und der entsprechenden schaltbaren Kupplung 25 seitlich in Klemmposition gefahren. Danach wird der Greifer 28 gelöst und der Zylinderraum 47 mit Druckmedium beaufschlagt, wodurch der Kolben 46 ausgetrieben wird und den Steg 21 klemmt. Die schräge Fäche an der Kolbenstirnseite des Kolbens 46 bewirkt zusammen mit der entsprechenden Gegenfläche des Stegs 21, daß die Unterseite des Werkzeugs 3′ immer fest auf der Aufnahmefläche 5′ aufliegt. Der Greifer 28 kann nun über die Schlitten 30 und 31 verfahren werden, um ein anderes Werkzeug zu holen, ein Werkzeug auszutauschen oder um Werkzeuge in ihrer Position auf dem Werkzeugträger 2′ zu verschieben.

Da nicht alle Schneidplatten der Drehräumwerkzeuge 3′ gleich schnell verschleißen, kann es vorteilhaft sein, ein Drehäumwerkzeug 3′ aus Einzelsegmenten 27 aufzubauen, die Schneidelementegruppen enthalten, die möglichst gleich schnell verschleißen. Es ist dann auch möglich, mit dem Greifer 28 aus dem Werkzeugmagazin 26 nur solche Einzelsegmente 27 zu entnehmen und bei den Werkzeugen 3', die sich auf dem Werkzeugträger 2' befinden, auszutauschen. Der Manipulator 29 kann somit auch dann eingesetzt werden, wenn nicht ganze Werkzeuge umpositioniert und ausgetauscht werden müssen, sondern wenn es erforderlich ist, innerhalb einer größeren Serie nure Einzelsegmente 27 mit verschlissenen Schneidkanten auszutauschen. Es können auch Mittel zur Kompensation des Verschleißes der Schneidkanten vorgesehen sein. Solche Mittel sind an Zerspanungswerkzeugen, die Schneidplatten aufweisen, bekannt. Hierbei ist es vorteihaft, wenn statt einer manuellen Betätigung eine Kraftbetätigung vorgesehen ist. Die hierzu notwendige Energie kann von z. B. im Werkzeugträger oder in einem Schlitten angeordneten, nachladbaren Energiespeichern geliefert werden.

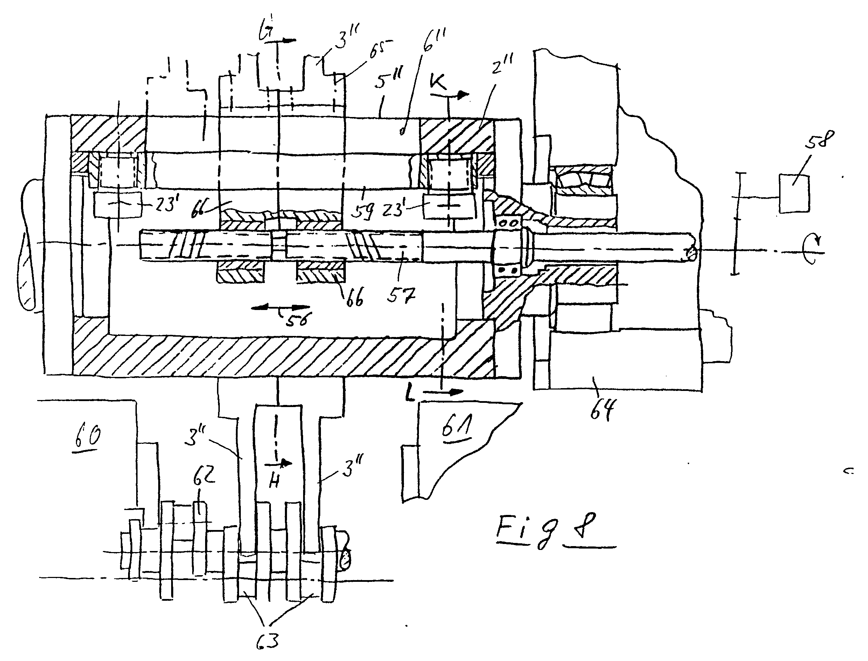

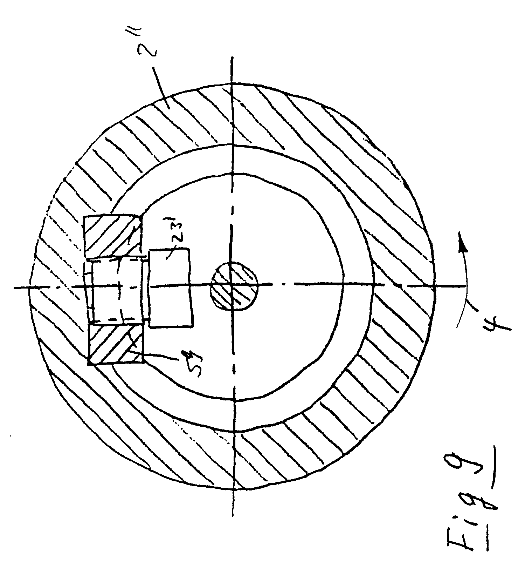

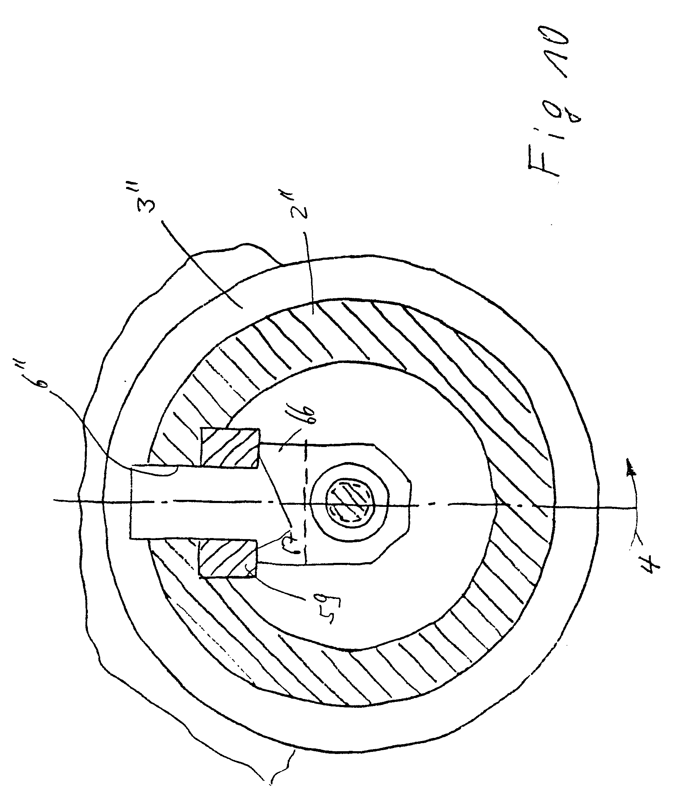

Eine Drehräummaschine kann selbstverständlich auch mit einem als Spindel gestalteten Werkzeugträger 2" ausgerüstet sein. Ein hin- und herbeweglicher Schlitten kann dann entfallen. Eine solche Ausführungsform ist in den Figuren 8 bis 10 bezüglich der wesentlichten Elemente dargestellt. In Figur 8 können die Spindelstöcke 60 und 61 beispielsweise den Spindelstöken 19 und 20 nach Figur 7 entsprechen. Im Ausführungsbeispiel nach Figur 8 soll als Werkstück 62 eine Kurbelwelle an den Lagerstellen 63 bearbeitet werden. Hierzu ist die Kurbelwelle in geeigneter Weise eingespannt zwischen den Spindelstöcken 60 und 61 und wird drehangetrieben. Seitlich oder auch oberhalb der Spindelstöcke 60 und 61 oder in sonstiger geeigneter Position sind weitere Spindelstöcke in sich gegenüberliegender Anordnung angeordnet. Diese Spindelstöcke sind nur einseitig angedeutet mit dem Bezugszeichen 64. So wie die Spindelstöcke 60 und 61 ein Werkstück tragen und drehantreiben, so tragen die Spindelstöcke 64 einen als Spindel ausgebildeten Werkzeugträger 2' der in den Spindelstöcken 64 drehantreibbar gelagert ist. Der Werkzeugräger 2" trägt im Ausführungsbeispiel zwei scheibenartig ausgebildete Drehräumwerkzeuge 3". Werkzeuge dieser Art sind an sich bekannt, so daß deren Aufbau hier nicht näher beschrieben werden muß.

Der walzenförmig ausgebildete Werkzeugträger 2" weist eine in Richtung seiner Rotationsachse verlaufende Führungs-und Spannut 6" auf, die die gesamte Wandung des hohl ausgebildeten Werkzeugträgers durchdringt. Die auf der Aufnahmefläche 5" des Werkzeugträgers 2" angeordneten Drehräumwerkzeuge 3" sind beispielsweise an den Stellen 65 mit einem radial ins Innere des Werkzeugträgers 2" durch die Nut 6" hindurchragende Mit nehmer 66 verbunden. Die Mitnehmer 66 weisen einen Schulterbereich 67 auf, über die ein Joch 59 gelegt ist. Das Joch 59 erstreckt sich damit längs im inneren Hohlraum des Werkzeugträgers 2". An seinen beiden Enden ist dieses Joch 59 je mit einer Kolben-Zylinder-Einheit 23' ausgerüstet, wobei diese Einheiten mit ihren Zylinderkörpern in radialer Richtung in das Joch 59 eingeschraubt sind, derart, daß ihre Kolbenstangen bei Betätigung gegen die radiale Innenfläche des Werkzeugträgers 2" drücken. Erfolgt nun eine solche Betätigung der genannten Kolben-Zylinder-Einheiten, so wird hierdurch das Joch 59 gegen die Schulterbereiche 67 der Mitnehmer 66 gepreßt, so daß diese damit in ihre Position geklemmt und gehalten werden.

Die Mitnehmer 66 weisen weiter in koaxialer Anordnung und ebenfalls koaxial zur Drehmitte des spindelförmig ausgebildeten Werkzeugträgers 2" jeweils ein Rechts- bzw. Linksgewinde auf, das mit entsprechenden Gewindestücken eines spindelförmigen Verstellorgans 57 zusammenarbeitet. Das spindelförmige Verstellorgan 57 wird von einem nicht näher dargestellten Antrieb bei Bedarf drehangetrieben, wodurch sich je nach Drehrichtung die Werkzeuge 3" in Richtung des Pfeils 56 oder umgekehrt bewegen. Da die Gewindesteigung des Verstellorgans 57 bekannt ist, kann über die Anzahl der Umdrehungen dieses Verstellorgans 57 auch exakt der Verschiebeweg der Werkzeuge 3" festgestellt werden. Hierzu ist das Verstellorgan 57 in geeigneter Weise mit einem Drehmelder 58 verbunden. Dieser Drehmelder 58 kann seine Signal an eine Maschinensteuerung geben, die dann über einen geeigneten Rechner diesqe Signale in eine Wegangabe umsetzt und weiter verarbeitet. Die Verschiebung der Werkzeuge 3" erfolgt bei nichtbetätigten oder gelösten Kolben-Zylinder-Einheiten 23'. Wenn die Verschiebung der Werkzeuge 3" beendet ist, wird deren sichere Klemmung über eine Betätigung der Kolben-Zylinder-Einheiten 23' erreicht.

Die Drehräumwerkzeuge 3" selbst können aus Segmenten aufgebaut sein, wobei dann diese Segmente wieder über einen Manipulator nach Art des Manipulators 29 in Figur 7 ausgetauscht werden können.

Insgesamt gelingt es mit der Erfindung erstmals Drehräummaschinen bei Bedarf auch vollständig automatisch und schnell in der Werkzeugbestückung auf wechselnde Werkstücke umzurüsten. Hierbei ist es für den Erfindungsgedanken ohne Bedeutung, ob die Spindelachsen der Maschine horizontal oder vertikal verlaufen. Außerdem wird erstmals eine stufenlose Verstellung der Werkzeuge erreicht.

**Liste der verwendeten Bezugszeichen**

| | |
|---|---|
| 1 | Drehräummaschine |
| 2 | Werkzeugträger |
| 2′ | Werkzeugträger |
| 2″ | Werkzeugträger |
| 3 | Drehräumwerkzeug |
| 3′ | Drehräumwerkzeug |
| 3″ | Drehräumwerkzeug |
| 4 | Arbeitsrichtung |
| 5 | Aufnahmefläche |
| 5′ | Aufnahmefläche |
| 5″ | Aufnahmefläche |
| 6 | Führungs- und Spannut |
| 6′ | Führungs- und Spannut |
| 6″ | Führungs- und Spannut |
| 7 | Ende |
| 8 | Ende |
| 9 | Mitnehmer |
| 9′ | Mitnehmer |
| 10 | Mitnehmer |
| 10′ | Mitnehmer |
| 11 | Mitnehmer |
| 11′ | Mitnehmer |
| 12 | Verschiebeantrieb |
| 12′ | Verschiebeantrieb |
| 13 | Verschiebeantrieb |
| 13′ | Verschiebeantrieb |
| 14 | Verschiebeantrieb |
| 14′ | Verschiebeantrieb |
| 15 | Magazin |
| 16 | Magazin |
| 17 | Maschinenständer |
| 18 | Gleitführung |
| 18′ | Gleitführung |
| 19 | Spindelstock |
| 20 | Spindelstock |
| 21 | Steg |
| 22 | Pfeil |
| 23 | Kolben-Zylinder-Einheit |
| 23′ | Kolben-Zylinder-Einheit |
| 24 | Spindel |
| 25 | schaltbare Kupplung |
| 26 | Werkzeugmagazin |
| 27 | Einzelsegment |
| 28 | Greifer |
| 29 | Manipulator |
| 30 | Schlitten |
| 31 | Schlitten |
| 32 | Spindelachse |
| 33 | Bett |
| 33′ | Bett |
| 34 | Führungselement |
| 35 | Pfeil |
| 36 | Hydraulikzylinder |
| 37 | Kolben |
| 38 | Kolbenstange |
| 39 | Druckleitung |
| 40 | Mitnehmerscheibe |
| 41 | Klemmschuh |
| 42 | oberer Flansch |
| 43 | Greifklaue |
| 43′ | Greifklaue |
| 44 | Strömungsmittelzylinder |
| 45 | Pfeil |
| 46 | Kolben |
| 47 | Zylinderraum |
| 48 | Feder |
| 49 | Schlitz |
| 50 | Ständer |
| 51 | Querträger |
| 52 | Motor |
| 53 | Motor |
| 54 | Spannmotor |
| 55 | Werkzeug |
| 56 | Pfeil |
| 57 | Verstellorgan |
| 58 | Drehmelder |
| 59 | Joch |
| 60 | Sindelstock |
| 61 | Spindelstock |
| 62 | Werkstück |
| 63 | Lagerstellen |
| 64 | Spindelstöcke |
| 65 | Klemmstelle |
| 66 | Mitnehmer |
| 67 | Schulterbereich |

**Ansprüche**

**1.** Drehräummaschine mit einem Werkzeugträger (2,2',2") für Drehräumwerkzeuge (3,3',3") mit mindestens einer Aufnahmefläche (5,5',5") zur Aufnahme von Drehräumwerkzeugen, dadurch gekennzeichnet, daß die Drehräumwerkzeuge (3,3',3") auf dem Werkzeugträger (2,2',2") mindestens quer (56) zur Arbeitsrichtung (4) in Führungs -und spannuten (6,6',6") stufenlos verschiebbar und feststellbar sind, sowie daß jedem Ende (7,8) mindestens eines Drehräumwerkzeuges (3) zugeordnete, verschiebbare und mit dem Ende (7,8) in Arbeitskontakt bringbare Mitnehmer (9,10,11;9',10',11') mit Verschiebeantrieben (12,13,14;12',13',14') verbunden sind.

**2.** Drehräummaschine mit einem Werkzeugträger (2,2',2") für Drehräumwerkzeuge (3,3',3`` ) mit mindestens einer Aufnahmefläche (5, 5', 5",) zur Aufnahme von Drehräumwerkzeugen, dadurch gekennzeichnet, daß die Drehräumwerkzeuge (3,3',3") auf dem Werkzeugträger (2,2',2") mindestens quer (56) zur Arbeitarichtung (4) in Führungs -und Spannuten (6,6',6") stufenlos verschiebbar und feststellbar sind, wobei die Führungsund Spannuten (6') nach oben so geöffnet ist, daß ein zugeordneter Steg (21) eines Drehräumwerkzeuges (3') von oben eingesetzt oder nach oben (22) entnommen werden kann.

3. Drehräummaschine nach Anspruch 1 oder 2, dadurch gekennzeichnet, daß jede Aufnahmefläche (5,5',5") mindestens eine quer (56) zur Arbeitsrichtung (4) verlaufende, über den gesamten Verstellbereich sich erstreckende Führungs- und Spannut (6,6',6`') für ein Drehräumwerkzeug (3,3',3") oder für zugeordnete Befestigungsmittel aufweist.

4. Drehräummaschine nach einem der Ansprüche 1 bis 3, gekennzeichnet durch kraftbetätigte Spannmechanismen zum Spannen der Drehräumwerkzeuge (3,3',3") auf dem Werkzeugträger (2,2',2").

5. Drehräummaschine nach Anspruch 3, dadurch gekennzeichnet, daß jede Führungs- und Spannut (6) als T-Nut ausgebildet ist.

6. Maschine nach Anspruch 1, dadurch gekennzeichnet, daß die einem Ende (7,8) zugeordneten Mitnehmer (9-11;9'-11') gemeinsam in einem Magazin (15;16) angeordnet sind.

7. Maschine nach Anspruch 1 oder 6, dadurch gekennzeichnet, daß allen Mitnehmern (9-11; 9'-1 1') Verschiebeantriebe (12-14; 12'-14') zugeordnet sind.

8. Maschine nach Anspruch 7, dadurch gekennzeichnet, daß allen Mitnehmern (9-1 1;9'-1 1') Wegmeßmittel zugeordnet sind.

9. Maschine nach Anspruch 6, dadurch gekennzeichnet, daß mindestens ein Magazin (15) mit einem Verschiebeantrieb verbunden oder verbindbar ist.

10. Maschine nach Anspruch 9, dadurch gekennzeichnet, daß mindestens ein Magazin (15) über eine lösbare Kupplung (Figur 3) mit dem Werkzeugträger (2) verbindbar ist.

11. Maschine nach einem der Ansprüche 1 sowie 3 bis 10, wobei der Werkzeugträger (2) als Schlitten ausgebildet ist, dadurch gekennzeichnet, daß auch mindestens ein Magazin (15) als Schlitten ausgebildet ist.

12. Maschine nach Anspruch 11, dadurch gekennzeichnet, daß am Maschinenständer (17) gemeinsame Gleitführungen (18) für Werkzeugträger (2) und Magazin (15) vorgesehen sind.

13. Maschine nach Anspruch 2, dadurch gekennzeichnet, daß als Spannmechanismus mindestens eine Kolben-Zylinder-Einheit (23,23'), mindestens einseitig betätigbar durch ein Fluid, vorgesehen ist.

14. Maschine nach Anspruch 3, dadurch gekennzeichnet, daß für jedes in die Nut (6') eingesetzte Drehräumwerkzeug (3') mindestens eine Kolben-Zylinder-Einheit (23) vorgesehen ist.

15. Maschine nach Anspruch 14, dadurch gekennzeichnet, daß jede Kolben-Zylinder-Einheit (23) in Richtung der Nut (6') verschiebbar angeordnet ist.

16. Maschine nach Anspruch 15, dadurch gekennzeichnet, daß im Werkzeugträger (2') jede Kolben-Zylinder-Einheit (23) mit einem dort angeordneten Verschiebeantrieb verbunden oder verbindbar ist.

17. Maschine nach Anspruch 16, dadurch gekennzeichnet, daß im Werkzeugträger (2') mindestens einer Nut (6') zugeordnet eine angetriebene Spindel (24) vorgesehen ist, die über schaltbare Kupplungen (25) mit den Kolben-Zylinder-Einheiten (23) verbindbar ist.

18. Maschine nach einem der Ansprüche 1 sowie 3 bis 17, dadurch gekennzeichnet, daß ein Manipulator (29) und ein Werkzeugmagazin (26) vorgesehen ist, wobei der Manipulator (29) einen verfahrbaren und positionierbaren Greifer (28) aufweist, mit welchem mindestens ein Drehräumwerkzeug (3') oder mindestens ein Einzelsegment (27) eines Drehräumwerkzeuges (3') auf mindestens dem Werkzeugträger (2') oder dem Werkzeugmagazin (26) positionierbar für eine Übernahme oder Einspannung ist.

19. Maschine nach Anspruch 18, dadurch gekennzeichnet, daß der Greifer (28) in antreibbaren und positionierbaren Schlitten (30,31) für eine Positionierung in mindestens zwei zueinander senkrecht stehenden Achsen angeordnet ist.

20. Maschine nach einem der Ansprüche 1 sowie 3 bis 19, dadurch gekennzeichnet, daß der Manipulator (29) mit Greifern (28) in Richtung der Hubbewegung des Werkzeugträgers (2') gesehen, vor oder hinter den Spindelstöcken (19,20) angeordnet ist, so daß der gegenüberliegende Bereich und der Bereich oberhalb der Spindelstöcke (19,20) frei bleibt.

**21.** Maschine nach Anspruch 2, dadurch gekennzeichnet, daß der Werkzeugträger (2") einen Klemmmechanismus (23',59) und mindestens ein Verstellorgan (57) eines Verstellantriebs aufweist.

## Claims

**1.** Rotary broaching machine comprising a tool carrier (2,2',2") for rotary broaching tools (3,3',3") with at least one receiving surface (5,5',5") for the receiving of rotary broaching tools, characterised in that the rotary broaching tools (3,3',3") are mounted on the tool carrier (2,2',2") at least transversely (56) to the direction of working (4) in guide and clamping grooves (6,6',6") so as to be steplessly displaceable and securable in position, and in that each end (7,8) of at least one rotary broaching tool (3) is connected to displacement drive means (12,13,14; 12',13',14') by associated entraining means (9,10,11; 9',1O',11') which are displaceable and can be brought into working contact with said ends (7,8).

**2.** Rotary broaching machine comprising a tool carrier (2,2' ,2") for rotary broaching tools (3,3',3") with at least one receiving surface (5,5',5") for the receiving of rotary broaching tools, characterised in that the rotary broaching tools (3,3',3") are mounted on the tool carrier (2,2' ,2") at least transversely (56) to the direction of working (4) in guide and clamping grooves (6,6',6") so as to be steplessly displaceable and securable in position, wherein the guide and clamping grooves (6') are open upwards so that an associated rib (21) of a rotary broaching tool (3') can be inserted therein from above or can be withdrawn therefrom upwards (22).

**3.** Rotary broaching machine according to claim 1 or 2, characterised in that each receiving surface (5,5',5") has at least one guide and clamping groove (6,6',6") for a rotary broaching tool (3,3',3") or for associated fastening means, said grooves running transversely (56) to the working direction (4) and extending over the full range of displacement.

**4.** Rotary broaching machine according to one of claims 1 to 3, characterised by power-actuated clamping mechanisms for clamping the rotary broaching tools (3,3'.3") to the tool carrier (2,2',2").

**5.** Rotary broaching machine according to claim 3, characterised in that each guide and clamping groove (6) is a T-shaped groove.

**6.** Machine according to claim 1, characterised in that the entraining means (9-11; 9'-11') associated with each of said ends (7,8) are arranged jointly in respective magazines (15;16).

**7.** Machine according to claim 1 or 6, characterised in that all entrainers (9-11; 9'-11') have displacement drive means (12-14; 12'-l4') associated therewith.

**8.** Machine according to claim 7, characterized in that all entrainers (9-11; 9'-11') have displacement measuring means associated therewith.

**9.** Machine according to claim 6, characterised in that at least one magazine (15) is connected to or is connectable to a displacement drive.

**10.** Machine according to claim 9, characterised in that at least one magazine (15) is connectable by means of a releasable coupling (Fig. 3) to the tool carrier (2).

**11.** Machine according to one of claims 1 and 3 to 10, wherein the tool carrier (2) is formed as a slide, characterized in that at least one magazine (15) is also formed as a slide.

**12.** Machine according to claim 11, characterized in that common slide guides (18) for tool carrier (2) and magazine (15) are provided on the machine stand (17).

**13.** Machine according to claim 2, characterised in that at least one piston-cylinder unit (23, 23') is provided as clamping mechanism, said at least one unit being actuatable by a fluid at least on one side.

**14.** Machine according to claim 3, characterised in that at least one piston-cylinder unit (23) is provided for each rotary broaching tool (3') inserted in the groove (6').

**15.** Machine according to claim 14, characterised in that each piston-cylinder unit (23) is arranged to be displaceable along the length of the groove (6').

**16.** Machine according to claim 15, characterised in that in the tool carrier (2') each piston-cylinder unit (23) is connected to or is connectable to a displacement drive arranged there.

**17.** Machine according to claim 16, characterised in that in the tool carrier (2') there is provided at least one groove (6') associated with a driving screw (24) which is connectable by means of switchable coupling means (25) to the piston-cylinder unit (23).

**18.** Machine according to one of claims 1 and 3 to 17, characterised in that a manipulator (29) and a tool magazine (26) are provided, wherein the manipulator (29) comprises a displaceable and positionable gripper (28) by means of which at least one rotary broaching tool (3') or at least one individual segment (27) of a rotary broaching tool (3') can be positioned on at least the tool carrier (2') or the tool magazine (26) for a transfer or clamping.

**19.** Machine according to claim 18, characterised in that the gripper (28) is arranged in drivable and positionable slides (30, 31) for a positioning on at least two mutually perpendicular axes.

**20.** Machine according to one of claims 1 and 3 to 19, characterised in that the manipulator (29) with grippers (28) viewed in the direction of the stroke movement of the tool carrier (2 ') is arranged in front of or behind the headstocks (19, 20) so that the opposing region and the region above the headstocks (19, 20) remain free.

**21.** Machine according to claim 2, characterised in that the tool carrier (2") comprises a clamping mechanism (23' ,59) and at least one setting member (57) of a regulating drive.

**Revendications**

**1.** Machine de brochage rotatif comportant un porte-outils (2,2' ,2") pour des outils de brochage (3,3',3") présentant au moins une surface de réception (5,5',5") pour recevoir des outils de brochage, caractérisée par le fait que l'on peut faire coulisser de façon continue et que l'on peut bloquer, dans des rainures de guidage et de bridage (6,6,'6"), les outils de brochage (3,3,'3") sur le porte-outils (2,2',2"), au moins transversalement (56) par rapport à la direction de travail (4), ainsi que par le fait que des entraîneurs (9,10,11;9',10',11'), correspondant à chaque extrémité (7,8) d'au moins un outil de brochage (3), pouvant coulisser et pouvant être amenés en contact de travail avec l'extrémité (7,8), sont reliés à des mécanismes d'entraînement en coulissement (12,13,14;12',13',14').

**2.** Machine de brochage rctatif comportant un porte-outils (2,2' ,2") pour des outils de brochage (3,3',3") présentant au moins une surface de réception (5,5',5") pour recevoir des outils de brochage, caractérisée par le fait que l'on peut faire coulisser de façon continue et que l'on peut bloquer, dans des rainures de guidage et de bridage (6,6' ,6"), les outils de brochage (3,3' ,3") sur le porte-outils (2,2'2") , au moins transversalement (56) par rapport à la direction de travail (4), étant précisé que les rainures de guidage et de bridage (6') sont ouvertes vers le haut de façon telle qu'une moulure correspondante (21) d'un outil de brochage (3') peut être insérée d'en haut ou enlevée vers le haut (22).

**3.** Machine de brochage rotatif selon la revendication 1 ou 2, caractérisée par le fait que chaque surface de réception (5,5',5") présente au moins une rainure de guidage et de bridage (6,6' ,6"), dirigée transversalement (56) à la direction de travail (4) et s'étendant sur toute la zone de déplacement, pour un outil de brochage (3,3',3") ou pour des moyens de fixation correspondants.

**4.** Machine de brochage rotatif selon l'une des revendications 1 à 3, caractérisée par des mécanismes de bridage motorisés pour brider les outils de brochage (3,3',3") sur le porte-outils (2,2' ,2").

**5.** Machine de brochage rotatif selon la revendication 3, caractérisée par le fait que chaque rainure de guidage et de bridage (6) a la forme d'une rainure en T.

**6.** Machine selon la revendication 1, caractérisée par le fait que les entraîneurs (9-11 ; 9'-11') correspondant à une extrémité (7,8) sont disposés en commun dans un magasin (15;16).

**7.** Machine selon la revendication 1 ou 6, caractérisée par le fait qu'à tous les entraîneurs (9-11; 9'-11') correspondent des mécanismes d'entraînement en coulissement (12-14 ; 12'-14').

**8.** Machine selon la revendication 7, caractérisée par le fait qu'à tous les entraîneurs (9-11; 9'-l1') correspondent des moyens de mesure du chemin parcouru.

**9.** Machine selon la revendication 6, caractérisée par le fait qu'au moins un magasin (15) est relié ou peut être relié à un mécanisme d'entraînement en coulissement.

**10.** Machine selon la revendication 9, caractérisée par le fait qu'au moins un magasin (15) peut être relié avec le porte-outils (2) par l'intermédiaire d'un accouplement débrayable.

**11.** Machine selon l'une des revendications 1 ou 3 à 10, étant précisé que le porte-outils (2) est conçu sous forme de chariot, caractérisée par le fait qu'au moins un magasin (15) est conçu sous forme d'un chariot.

**12.** Machine selon la revendication 11, caractérisée par le fait que sur le bâti (17) du tour sont prévus des guidages de glissement communs (18) pour le porte-outils (2) et pour le magasin (15).

**13.** Machine selon la revendication 2, caractérisée par le fait que comme mécanisme de bridage est prévu au moins un ensemble piston-cylindre (23,23') qu'un fluide peut actionner au moins d'un côté.

**14.** Machine selon la revendication 3, caractérisée par le fait que pour chaque outil de brochage (3') inséré dans la rainure (6') est prévu au moins un ensemble piston-cylindre (23).

**15.** Machine selon la revendication 14, caractérisée par le fait que chaque ensemble piston-cylindre (23) est disposé avec liberté de coulisser en direction de la rainure (6').

**16.** Machine selon la revendication 15, caractérisée par le fait que dans le porte-outils (2') chaque ensemble piston-cylindre (23) est relié, ou peut être relié, avec un mécanisme d'entraînement en coulissement qui y est disposé.

**17.** Machine selon la revendication 16, caractérisée par le fait que dans le porte-outils (2'), en correspondance avec au moins une rainure (6'), est prévue une vis-mere entraînée (24) qui peut être reliée avec les ensembles pistoncylindre (23) par l'intermédiaire d'accouplements débrayables (25).

**18.** Machine selon l'une des revendications 1 ou 3 à 17, caractérisée par le fait qu'il est prévu un manipulateur (29) et un magasin à outils (26), étant précisé que le manipulateur (29) présente une pince qui peut se déplacer et se positionner et au moyen de laquelle au moins un outil de brochage (3'), ou au moins un segment individuel (27) d'un outil de brochage (3') peut être positionné sur au moins le porte-outils (2') ou sur le magasin à outils (26) pour un transfert ou un bridage.

**19.** Machine selon la revendication 18, caractérisée par le fait que la pince (28)est disposée sur des chariots (30,31) qui peuvent être entraînés et positionnés pour un positionnement selon au moins deux axes perpendiculaires l'un à l'autre.

**20.** Machine selon l'une des revendications 1 ou 3 à 19, caractérisée par le fait que le manipulateur (29) est disposé par rapport aux pinces (28) en avant ou en arrière des poupées (19,20), vu dans la direction de la course du porte-outils (2'), de sorte que la zone située en face des poupées et la zone située au-dessus des poupées (19,20) restent libres.

**21.** Machine selon la revendication 2, caractérisée par le fait que le porte-outils (2") présente un mécanisme de blocage (23' ,59) et au moins un organe de déplacement (57) d'un mécanisme d'entraînement en déplacement.

16
13'
12'
9'
10'
11'
14'
32
18
32
7
3
19
20
5
2
C
3
3
D
6
36
12
9
10
11
14
13
8
15

Fig. 2

32
19
1
A
B
14
9
3
18
9'
14'
15
16
Y
6
2
4
33
17

Fig. 1

2
15
43
44
45
43'
37
36
39
3
38
34
42
41
40
35
6
2

Fig. 3

Fig. 4

F
20 (19)
18'
33'
4
3'
27
28
29
30
53
31
52
51
2'
6'
X
50
23
3'
47
48
25
49
24
46
6'
21
22
2'
5'
4

Fig.5

Fig.6

32
54
30
53
31
28
32
29
52
E
55
26
3'
3'
3'
56
19
5'
33'
18'
2'
20

Fig. 7

58
64
Fig 8
61
2''
K
L
6''
5''
3''
65
59
23'
57
66
56
G
H
63
62
60

2''
23'
54
4
Fig 9

Fig 10
3''
2''
6''
66
65
4